# EUROPÄISCHE PATENTANMELDUNG

(11) **EP 4 622 219 A1**
(43) Veröffentlichungstag der Anmeldung: **24.09.2025**
(21) Anmeldenummer: 24164193.5
(22) Anmeldetag: 18.03.2024
(51) Int. Cl.: H04L 65/80

(54) **VERFAHREN, COMPUTERPROGRAMM UND VORRICHTUNG ZUR KONFIGURATION VON FUNKVERBINDUNGEN FÜR ZWEI ODER MEHR ENDGERÄTE, DIE VON EINER GEMEINSAMEN ANWENDUNG BENUTZT WERDEN**

(71) Anmelder: Deutsche Telekom AG, 53113 Bonn (DE)
(72) Erfinder: BERGNER, Andreas, 12165 Berlin (DE)
(74) Vertreter: 2SPL Patentanwälte PartG mbB

(57) **Zusammenfassung**

Die vorliegende Offenbarung betrifft ein Verfahren, ein Computerprogramm und eine Vorrichtung zur Konfiguration von Funkverbindungen für zwei oder mehr Endgeräte, die von einer gemeinsamen Anwendung benutzt werden. Das Verfahren (10) zur Konfiguration von Funkverbindungen für zwei oder mehr Endgeräte, die von einer gemeinsamen Anwendung benutzt werden, umfasst ein Erhalten (11) einer Information über eine erste Leistungskapazität eines ersten Endgerätes und ein Erhalten (12) einer Information über eine zweite Leistungskapazität eines zweiten Endgerätes. Das Verfahren (10) umfasst ferner ein Bestimmen (13) einer möglichen Verbindungsqualität, die den Leistungskapazitäten des ersten Endgeräts und des zweiten Endgeräts entspricht. Das Verfahren (10) umfasst darüber hinaus ein Konfigurieren (14) einer ersten Funkverbindung zwischen der gemeinsamen Anwendung und dem ersten Endgerät und einer zweiten Funkverbindung zwischen der gemeinsamen Anwendung und dem zweiten Endgerät basierend auf der Verbindungsqualität.

## Beschreibung

### Technisches Gebiet

Die vorliegende Offenbarung betrifft ein Verfahren, ein Computerprogramm und eine Vorrichtung zur Konfiguration von Funkverbindungen für zwei oder mehr Endgeräte, die von einer gemeinsamen Anwendung benutzt werden, insbesondere, aber nicht ausschließlich, ein Konzept zur Konfiguration von Dienstqualitäten für Funkverbindungen für mehrere Endgeräte, die eine gemeinsame Anwendung bedienen, zur Verbesserung einer Synchronisation der Daten, die mit den Endgeräten über die Funkverbindungen kommuniziert werden.

### Hintergrund

Im Zuge der Automatisierung und Digitalisierung von Prozessen, die in Echtzeit gesteuert werden sollen, ist es notwendig die beteiligten Geräte zu vernetzen. Im Rahmen dieser Vernetzung werden Daten zwischen den dezentralen Geräten und einer zentralen Instanz (Applikation) ausgetauscht. Dabei sind die jeweiligen Verbindungsqualitäten zu den beteiligten Endgeräten für die Gesamtqualität bestimmend. Dies kommt insbesondere bei Funkverbindungen zum Tragen, da diese üblicherweise größeren Schwankungen in der Übertragungsqualität unterliegen als schnurgebundene Verbindungen.

Quality of Service (QoS) (Qualität eines Dienstes) in Kommunikationsnetzen bezieht sich zunächst auf Qualitätsparameter, wie Datenrate, Latenz, und Fehlerrate, die einer Funkverbindung zugeordnet werden können und die für die Qualität eines Dienstes bestimmend sind. Manche Kommunikationsnetze besitzen die Fähigkeit, verschiedenen Arten von Datenverkehr unterschiedliche Prioritätsstufen zuzuweisen, um sicherzustellen, dass wichtige Daten im Vergleich zu weniger wichtigem Datenverkehr mit höherer Zuverlässigkeit und Geschwindigkeit übertragen werden. QoS-Mechanismen in Netzen helfen bei der Verwaltung und Priorisierung von Datenpaketen anhand von Kriterien wie Latenz, Jitter, Bandbreite und Paketverlust. Durch die Implementierung von QoS-Kontrollen können Kommunikationsnetze die Leistung und Effizienz der Datenübertragung verbessern, was zu einem besseren Benutzererlebnis und einer höheren Zuverlässigkeit des Netzes führt. Dies ist besonders wichtig für Anwendungen wie VoIP (Voice over Internet Protocol, Sprachdienste über IP), Videostreaming und Online-Spiele, die für eine optimale Funktionalität eine gleichbleibende Leistung (insbesondere Datenrate) und geringe Latenzzeiten erfordern. Die effektive Implementierung von QoS spielt eine entscheidende Rolle, wenn es darum geht, sicherzustellen, dass die Netzwerkressourcen effizient genutzt werden und wichtige Daten rechtzeitig geliefert werden.

Dabei sind die verwendeten Zugriffstechnologien für die einzelnen Kommunikationsnetze begrenzende Faktoren, da diese beispielsweise eine maximalen Datenrate, eine minimale Latenz, eine Fehlerrate, usw. vorgeben.

### Zusammenfassung

Ausführungsbeispiele basieren auf der Erkenntnis, dass beispielsweise bei einer Punkt-zu-Punkt-Beziehung zwischen einem dezentralen Gerät und einer zentralen Instanz (Applikation) Qualitätsparameter dazwischen relativ gut beschrieben und gesteuert werden können. Wenn jedoch mehrere Endgeräte an einer Applikation oder Anwendung beteiligt sind, dann können die Verbindungen zu diesen Endgeräten hin erhebliche Qualitätsunterscheide aufweisen. Ausführungsbeispiele basieren daher auf dem Gedanken, in einem solchen Fall zunächst die Leistungskapazitäten der Endgeräte über deren zur Verfügung stehende Funkverbindung zu bestimmen und die einzelnen Funkverbindungen dann basierend auf den zur Verfügung stehenden Leistungskapazitäten zu konfigurieren. Dabei können diese im Rahmen der zur Verfügung stehenden Konfigurationsmöglichkeiten, möglichst gleich konfiguriert werden, z.B. möglichst gleiche Latenzen, auch wenn je nach Anwendungsfall von/zu den Endgeräten unterschiedliche Datenraten erforderlich sind.

Ausführungsbeispiele schaffen ein Verfahren zur Konfiguration von Funkverbindungen für zwei oder mehr Endgeräte, die von einer gemeinsamen Anwendung benutzt werden. Das Verfahren umfasst ein Erhalten einer Information über eine erste Leistungskapazität eines ersten Endgerätes und ein Erhalten einer Information über eine zweite Leistungskapazität eines zweiten Endgerätes. Das Verfahren umfasst darüber hinaus ein Bestimmen einer möglichen Verbindungsqualität, die den Leistungskapazitäten des ersten Endgeräts und des zweiten Endgeräts entspricht und ein Konfigurieren einer ersten Funkverbindung zwischen der gemeinsamen Anwendung und dem ersten Endgerät und einer zweiten Funkverbindung zwischen der gemeinsamen Anwendung und dem zweiten Endgerät basierend auf der Verbindungsqualität.

Ausführungsbeispiele ermöglichen daher eine Koordination zweier Funkverbindungen zu Endgeräten hinsichtlich der Verbindungqualität. Das Bestimmen der möglichen Verbindungsqualität kann dabei ein Abgleichen eines Qualitätsparameters für die beiden Funkverbindungen umfassen.

Die Information über die Leistungsfähigkeit der ein oder mehreren Endgeräte können dabei ein oder mehrere Elemente der Gruppe von einer maximalen Datenrate, einer Latenz, einer Datenfehlerrate und einer Speicherkapazität umfassen. Diese Elemente können auch den (konfigurierbaren) Qualitätsparametern von Funkverbindungen entsprechen. Beispielsweise können so Datenraten und/oder Latenzen der beiden Funkverbindungen in Abstimmung zueinander konfiguriert werden. Dabei können die jeweiligen Qualitätsparameter, die für die beiden Funkverbindungen konfiguriert werden, abgestimmt werden, also in Abhängigkeit der Anforderungen der gemeinsamen Anwendung möglichst nahe beieinander gewählt werden. Beispielsweise kann ein Unterschied in der konfigurierten Latenz und/oder Datenrate möglichst klein oder zumindest unter einer vorgegebenen Schwelle gewählt werden.

In weiteren Ausführungsbeispielen kann das Konfigurieren der ersten und zweiten Funkverbindung ein Synchronisieren von Daten des ersten und des zweiten Endgerätes umfassen. Beispielsweise kann durch das Konfigurieren dafür gesorgt werden, dass eine Latenz, im Sinne eines Echtzeitunterschieds, zwischen den Daten der ersten und zweiten Funkverbindungen eine vorgegebene Schwelle nicht überschreitet. Die erste und die zweite Funkverbindung können z.B. über ein Mobilfunknetz bereitgestellt werden. Damit können die QoS Parameter für die beiden Verbindungen entsprechend abgeglichen werden.

Die erste und die zweite Funkverbindung können auch über Mobilfunknetze unterschiedlicher Mobilfunkbetreiber bereitgestellt werden. Ausführungsbeispiele ermöglichen so die Koordination der Funkverbindungskonfigurationen zwischen unterschiedlichen Mobilfunkbetreibern, bzw. auch zwischen unterschiedlichen Netzen, z.B. mit unterschiedlichen Frequenzen, Zugriffstechnologien, Bandbreiten, etc.

In Ausführungsbeispielen kann die gemeinsame Anwendung Daten von dem ersten Endgerät und von dem zweiten Endgerät erfassen und diese synchronisiert darstellen. In Ausführungsbeispielen begünstigen die basierend auf den Leistungskapazitäten konfigurierten Funkverbindungen die Synchronisation der Daten. Beispielsweise können so Latenzen und Speicherkapazitäten, die für ein etwaiges Puffern benötigt werden, reduziert werden. Z. B. können das erste Endgerät und das zweite Endgeräte der gemeinsamen Anwendung unterschiedliche Sensordaten liefern. Die Sensordaten können dann, beispielsweise in Relation zu einer Echtzeit (Echtzeitstempel), synchronisiert und dargestellt werden.

Dies kann beispielsweise durch Übertragen von synchronisierten Daten von dem ersten Endgerät über die erste Funkverbindung und von dem zweiten Endgerät über die zweite Funkverbindung an die gemeinsame Anwendung und durch Darstellen der synchronisierten Daten durch die gemeinsame Anwendung geschehen. Dabei können die entsprechend konfigurierten Funkverbindungen durch zugesicherte Qualitätsparameter dafür sorgen, dass eine Synchronisation der Daten durch die Funkübertragung nicht verloren geht. In Ausführungsbeispielen kann ein synchronisiertes Übertragen bedeuten, dass die Daten eine maximale Latenz gegenüber ihrer Erfassung oder gegenüber Echtzeit nicht überschreiten.

Das erste und/oder das zweite Endgerät können beispielsweise Information über einen Stellgrad eines Aktors an die gemeinsame Anwendung übermitteln. So können neben Sensordaten auch Stellgrade den Sensordaten im Rahmen von zeitlichen Synchronisationsvorgaben einander gegenübergestellt werden. Der Aktor kann dabei ferngesteuert sein und in Echtzeit, d.h. ohne wahrnehmbare Verzögerung, können dessen Position und dazu in Relation stehende Sensordaten dargestellt werden.

Das Verfahren kann ferner ein Empfangen von ersten Daten von dem ersten Endgerät und ein Empfangen von zweiten Daten von dem zweiten Endgerät umfassen. Darüber hinaus kann das Verfahren ein Darstellen von synchronisierten ersten und zweiten Daten auf einem dritten Endgerät durch die gemeinsame Anwendung beinhalten. Insofern können Daten von unterschiedlichen Endgeräten erfasst und ohne (wesentlichen) Verlust eines zeitlichen Zusammenhangs dargestellt werden.

In weiteren Ausführungsbeispielen kann das Konfigurieren der ersten und der zweiten Funkverbindung ein Konfigurieren einer direkten Funkverbindung zwischen dem ersten Endgerät und dem zweiten Endgerät umfassen. Das Verfahren umfasst dann ferner ein Konfigurieren einer Funkverbindung zwischen der gemeinsamen Anwendung und dem ersten Endgerät und/oder dem zweiten Endgerät. Insofern können die Funkverbindungen so konfiguriert werden, dass die Endgeräte Daten direkt miteinander austauschen und dann über eine gemeinsame oder auch über getrennte Funkverbindungen mit der gemeinsamen Anwendung kommunizieren. Das Verwenden einer direkten Kommunikation in Ausführungsbeispielen kann Qualitätsvorteile bieten, da beispielsweise Latenzzeiten auf der direkten Verbindung kürzer sein können.

In weiteren Ausführungsbeispielen kann das erste Endgerät ein Aktivitätssensor zur Erfassung einer Aktivität eines Patienten sein und das zweite Endgerät kann ein Bewegungssensor zur Erfassung einer Bewegung des Patienten sein. Das dritte Endgerät kann ein Videogerät zur Darstellung der Bewegung beispielsweise einer Hand in einer virtuellen Umgebung sein. Ausführungsbeispiele können so eine effiziente Therapiemöglichkeit für einen Patienten schaffen. Der Aktivitätssensor misst dabei beispielsweise eine Muskelaktivität des Patienten und der Bewegungssensor erfasst eine Bewegung der Hand des Patienten über ein Exoskelett mit Sensoren. Dann kann eine Hand eines Patienten therapiert werden und gleichzeitig dem Patienten, etwa über eine VR-Brille (von engl. Virtual Reality, virtuelle Realität), eine ansprechende Therapieumgebung angezeigt werden. Durch die Datensynchronisation sieht der Patient dann seine Bewegung bzw. Aktivität in Echtzeit (ohne für ihn wahrnehmbare Verzögerung) in der virtuellen Umgebung.

Ausführungsbeispiele schaffen auch ein Computerprogramm mit einem Programmcode zur Durchführung eines der hierin beschriebenen Verfahren, wenn der Programmcode auf einem Computer, einem Prozessor oder einer programmierbaren Hardwarekomponente ausgeführt wird.

Ein weiteres Ausführungsbeispiel ist eine Vorrichtung zur Konfiguration von Funkverbindungen für zwei oder mehr Endgeräte, die von einer gemeinsamen Anwendung benutzt werden, mit ein oder mehreren Schnittstellen, die zur Kommunikation mit einem oder mehreren Kommunikationssystemen ausgebildet sind. Die Vorrichtung umfasst ferner ein oder mehrere Signalverarbeitungskomponenten, die ausgebildet sind, um eines der hierin beschriebenen Verfahren auszuführen.

### Figurenkurzbeschreibung

Einige Beispiele von Vorrichtungen, Verfahren und/oder Computerprogrammen werden nachfolgend bezugnehmend auf die beiliegenden Figuren lediglich beispielhaft näher erläutert. Es zeigen:
Fig. 1 ein Blockdiagramm eines Ausführungsbeispiels eines Verfahrens zur Konfiguration von Funkverbindungen für zwei oder mehr Endgeräte, die von einer gemeinsamen Anwendung benutzt werden;
Fig. 2 ein Blockdiagramm eines Ausführungsbeispiels einer Vorrichtung zur Konfiguration von Funkverbindungen für zwei oder mehr Endgeräte, die von einer gemeinsamen Anwendung benutzt werden;
Fig. 3 ein Beispiel zur Veranschaulichung von Latenzen in einem Kommunikationsnetz;
Fig. 4 ein Beispiel zur Konfiguration von mehreren Funkverbindungen über verschiedene Netze in einem Ausführungsbeispiel;
Fig. 5a ein Beispiel zur Konfiguration von mehreren Funkverbindungen über ein Campusnetz in einem Ausführungsbeispiel;
Fig. 5b ein Ausführungsbeispiel zur Konfiguration von mehreren Funkverbindungen unter Nutzung direkter Kommunikation zwischen Endgeräten;
Fig. 6a eine Übersicht über Protokolle in einem Ausführungsbeispiel;
Fig. 6b eine Übersicht über Protokolle unter Nutzung direkter Kommunikation in einem Ausführungsbeispiel;
Fig. 7a eine Darstellung eines Ausführungsbeispiels in der medizinischen Therapie;
Fig. 7b eine Darstellung eines Ausführungsbeispiels in der Produktion;
Fig. 8 einen Überblick über QoS-Mechanismen in 3GPP; und
Fig. 9 eine mögliche Implementierung einer Funkverbindungskonfiguration in einem Ausführungsbeispiel.

### Beschreibung

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

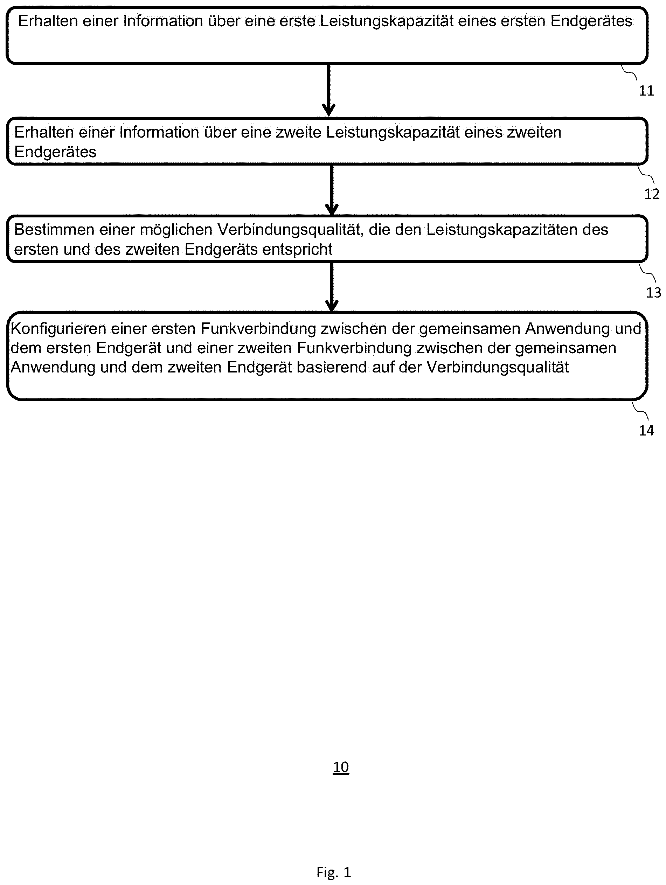

Fig. 1 zeigt ein Blockdiagramm eines Ausführungsbeispiels eines Verfahrens 10 zur Konfiguration von Funkverbindungen für zwei oder mehr Endgeräte, die von einer gemeinsamen Anwendung benutzt werden. Das Verfahren 10 umfasst ein Erhalten 11 einer Information über eine erste Leistungskapazität eines ersten Endgerätes und ein Erhalten 12 einer Information über eine zweite Leistungskapazität eines zweiten Endgerätes. Das Verfahren 10 umfasst ferner ein Bestimmen 13 einer möglichen Verbindungsqualität, die den Leistungskapazitäten des ersten und des zweiten Endgeräts entspricht. Das Verfahren 10 umfasst darüber hinaus ein Konfigurieren 14 einer ersten Funkverbindung zwischen der gemeinsamen Anwendung und dem ersten Endgerät und einer zweiten Funkverbindung zwischen der gemeinsamen Anwendung und dem zweiten Endgerät basierend auf der Verbindungsqualität. Die Verbindungsqualität kann so den Leistungskapazitäten der Endgeräte angepasst werden. Dadurch kann beispielsweise vermieden werden, dass die beiden Endgeräte mit stark unterschiedlichen Daten raten oder Latenzzeiten operieren.

In Ausführungsbeispielen kann die Information über die Leistungskapazität ein oder mehrere Elemente der Gruppe von einer maximalen Datenrate, einer Latenz, einer Datenfehlerrate und einer Speicherkapazität umfassen. Die Leistungskapazität hängt dabei nicht nur von den Leistungsmerkmalen der jeweiligen Endgeräte ab (Prozessorleistung, Speicherkapazität, unterstütze Zugriffstechnologie und Bandbreite), sondern auch davon, welche Zugriffstechnologie zur Verfügung steht (LTE (Long Term Evolution), 5G (Generation), 6G, WLAN (Wireless Local Area Network) und wie deren Parameter/Status (Bandbreite, Auslastung, usw.) sind. Je nachdem, welche Zugriffstechnologien unter welchen Voraussetzungen zur Verfügung stehen, kann die Leistungskapazität eines Endgerätes unterschiedlich ausfallen. Die Information über die Leistungskapazität des Endgerätes ist demnach in Ausführungsbeispielen eine Information darüber, welche Verbindungsqualität (Datenrate, Latenz, Fehlerrate, usw.) unter den aktuellen Voraussetzungen unterstützt werden kann (Qualitätsparameter).

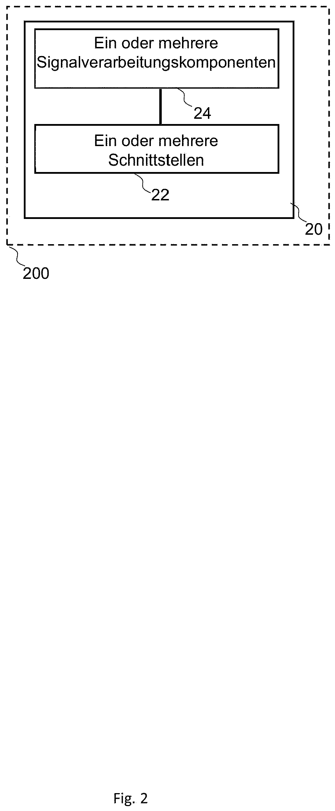

Fig. 2 zeigt ein Blockdiagramm eines Ausführungsbeispiels einer Vorrichtung 20 zur Konfiguration von Funkverbindungen für zwei oder mehr Endgeräte, die von einer gemeinsamen Anwendung benutzt werden. Die Vorrichtung 20 umfasst ein oder mehrere Schnittstellen 22, die zur Kommunikation mit einem oder mehreren Kommunikationssystemen ausgebildet sind.

Die ein oder mehreren Schnittstellen 22 sind mit ein oder mehreren Signalverarbeitungskomponenten 24 gekoppelt. Die ein oder mehreren Signalverarbeitungskomponenten 24 sind ausgebildet, um eines der hierin beschriebenen Verfahren auszuführen. Die Fig. 2 illustriert auch ein Ausführungsbeispiel einer Netzwerkkomponente 200, die die Vorrichtung 20 umfasst. Die Netzwerkkomponente kann beispielsweise ein zentraler Rechner oder ein Rechenzentrum sein, auf dem die gemeinsame Anwendung ausgeführt wird. Die gemeinsame Anwendung kann jedoch auch anderswo ausgeführt werden und die Netzwerkkomponente zur Konfiguration der Funkverbindungen ansprechen.

In Ausführungsbeispielen können die eine oder mehreren Schnittstellen 22 jedem Mittel zum Erhalten, Empfangen, Übertragen oder Bereitstellen von analogen oder digitalen Signalen oder Informationen entsprechen, z. B. jedem Stecker, Kontakt, Stift, Register, Eingangsanschluss, Ausgangsanschluss, Leiter, Spur usw., der die Bereitstellung eines Signals ermöglicht. Eine Schnittstelle kann drahtlos oder drahtgebunden sein, und sie kann so konfiguriert sein, dass sie mit weiteren internen oder externen Komponenten kommuniziert, d. h. Signale oder Informationen überträgt oder empfängt. Vorliegend können die ein oder mehrere Schnittstellen 22 beispielsweise ausgebildet sein, um Information über die Leistungskapazitäten der Endgeräte und auch Information über die Konfiguration der Funkverbindung zumindest in Teilen schnurlos zu übertragen. Dabei können diese auch von Mobilfunknetzten oder anderen Drahtlosnetzzugängen Gebrauch machen und entsprechende Senderkomponenten, Empfängerkomponenten, Gateways, usw. umfassen.

Das Kommunikationssystem kann ein beliebiges System zur Kommunikation zwischen den Endgeräten und der gemeinsamen Anwendung, die beispielsweise auf einem zentralen Server ausgeführt wird, sein. Das Kommunikationssystem kann dabei typische Netzwerkkomponenten, wie Server, Router, Rechner, Rechenzentren usw. umfassen. Die Funkverbindung kann dabei über ein Mobilkommunikationssystem erfolgen, das beispielsweise einem der von der 3rd Generation Partnership Project (3GPP) standardisierten Mobilkommunikationssysteme entspricht, wie Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) oder Evolved UTRAN (E-UTRAN), Long Term Evolution (LTE) oder LTE-Advanced (LTE-A), 5G (5th Generation), 6G (6th Generation) oder Mobilkommunikationssysteme mit anderen Standards, z. B. Worldwide Interoperability for Microwave Access (WIMAX) IEEE 802.16 oder Wireless Local Area Network (WLAN) IEEE 802.11, allgemein jedes System, das auf Time Division Multiple Access (TDMA), Frequency Division Multiple Access (FDMA), Orthogonal Frequency Division Multiple Access (OFDMA), Code Division Multiple Access (CDMA) usw. basiert. Im Folgenden werden die Begriffe Mobilkommunikationssystem und Mobilkommunikationsnetz synonym verwendet. Dabei kommt es in Ausführungsbeispielen nicht auch eine konkrete Implementierung des Zugangs an, sondern vielmehr darauf, dass die einzelnen Funkverbindungen zu den Endgeräten und hin zu der gemeinsamen Anwendung entsprechend der Leistungskapazitäten der Endgeräte und der Anforderungen der Anwendung konfiguriert werden. Im 3GPP wird der Begriff UE (User Equipment) für die Endgeräte verwendet. Insofern sind die hier beschriebenen Geräte oder Endgeräte mit einer UE gleichzusetzen.

In Ausführungsbeispielen können die ein oder mehreren Signalverarbeitungskomponenten 24 zur digitalen Signalverarbeitung ausgebildet sein. Dabei können sie als eine oder mehrere Verarbeitungseinheiten, ein oder mehrere Verarbeitungsgeräte, ein beliebiges Mittel zur Verarbeitung, ein beliebiges Mittel zur Bestimmung, ein beliebiges Mittel zur Berechnung, wie einem Prozessor, einem Computer oder einer programmierbaren Hardwarekomponente, die mit entsprechend angepasster Software betrieben werden kann, implementiert werden. Beispielsweise können die ein oder mehreren Signalverarbeitungskomponenten auch Speicher umfassen, die entsprechende Konfigurationen für Leistungskapazitäten von Endgeräten und deren verschiedene Zugänge vorhalten. Die beschriebene Funktion der ein oder mehreren Signalverarbeitungskomponenten 24 kann auch in Software implementiert sein, die dann auf einer oder mehreren programmierbaren Hardwarekomponenten ausgeführt wird. Solche Hardwarekomponenten können einen Universalprozessor, einen digitalen Signalprozessor (DSP), einen Mikrocontroller usw. umfassen.

Ausführungsbeispiele ermöglichen ein Zusammenspiel von mehreren Geräten auf der Anwenderseite. Beispielsweise wird eine VR-Anwendung (Virtuelle Realität) mit einer Maschine, z.B. mit Bewegungsdaten und Sensordaten synchronisiert. Wenn mehrere dezentrale Geräte an einem Ort zusammenarbeiten bzw. zusammen funktionieren müssen, dann ist die Synchronisation der verschiedenen Verbindungen eine Herausforderung in mobilen Netzwerken, weil je nach SIM-Karten Profil (SIM=Subscriber Identity Modul) bzw. lokalem Netzwerk und dessen Topologie verschiedene Bandbreiten und damit Latenzen zur Verfügung stehen und das schwächste Element das Ergebnis bestimmt.

3GPP hat einen Quality of Service definiert, um der Mobilfunkverbindung temporär eine Qualität (Quality on Demand (QoD)) zuzuweisen, auf die im Folgenden noch näher eingegangen wird. Innerhalb des QoD-Konstruktes kann der Mobile Network Operator (MNO) Serviceklassen (QoS (Quality of Service) definieren in denen das Gerät (UE) eine minimal garantierte Bandbreite innerhalb der Funkzelle zugewiesen bekommt. In einem Ausführungsbeispiel kann das oben beschriebene Verfahren 10 beispielsweise so umgesetzt werden, dass die lokale Applikation (gemeinsame Anwendung) über die Network-API (Application Programming Interface) Netzwerk Ressourcen (Quality on Demand bzw. Quality of Service) anfragt und bereitgestellt bekommt. Ausführungsbeispiele können hier den Vorteil bieten, dass teilweise sehr aufwendig produzierte Campus-Netzwerke für bestimmte Applikationen entlastet werden können.

In weiteren Ausführungsbeispielen kann das Konfigurieren 14 der ersten und zweiten Funkverbindung ein Synchronisieren von Daten des ersten und des zweiten Endgerätes umfassen. Synchronisation in diesem Zusammenhang ist dabei so zu verstehen, dass die erfassten, zusammengeführten oder dargestellten Daten zu einem Referenzzeitstempel (z.B. GPS (Global Positioning System)- Echtzeit, oder von einem Time-Server bereitgestellte Zeitreferenz) eine zeitliche Abweichungsgrenze nicht überschreiten. Die Abweichungsgrenze kann dabei so gewählt werden, dass ein menschlicher Nutzer die zeitliche Abweichung nicht wahrnimmt. Z.B. können ein Videosignal und ein zugehöriges Audiosignal um nicht mehr als 50ms, 100ms, 150ms, 200ms, oder 250ms zeitlich gegeneinander verschoben sein. Sensordaten, die in einer virtuellen Welt dargestellt werden, dürfen gegenüber den tatsächlich ausgeführten Bewegungen eines Nutzers um nicht mehr als 50ms, 100ms, 150ms, 200ms, oder 250ms verzögert sein, weil dem Benutzer sonst das Nachhinken der Darstellung gegenüber seinen tatsächlich ausgeführten Bewegungen auffällt. Ähnlich verhält es sich bei Fernwartungsszenarien, wo diverse Stellgrade (Z.B. ein Regelventil) und zugehörige Sensordaten (Temperatur, Druck, Durchfluss, etc.) synchronisiert dargestellt werden sollen. Dabei sollen etwaige Verzögerungen zwischen einer Änderung der Stellgröße und einer damit zusammenhängenden Änderung der Messgröße im Wesentlichen den tatsächlichen Verzögerungen in der Realität entsprechen und nicht durch unterschiedliche Verbindungsqualitäten verfälscht werden.

Die Synchronisation von Datenströmen von mehreren Nutzern über mehrere Netzwerkverbindungen ist daher für manche Anwendungen sehr wichtig. Daher wird vorliegend eine Situation betrachtet, bei der verschiedene Geräte an einem Ort (z.B. Produktionsstätte, Therapie-Zentrum, Betriebsgelände etc.) automatisiert in einer definierten Applikation (gemeinsame Anwendung) zusammenarbeiten müssen, damit der Nutzer seine Aufgabe erfüllen kann und von einer oder mehreren Mobilfunkzellen versorgt wird. Alle Geräte verbinden sich über verschiedene SIM-Karten (Netze, Zugriffstechnologien, MNOs) mit dieser Applikation. Die erste und die zweite Funkverbindung zwischen der gemeinsamen Anwendung und den Endgeräten kann über ein Mobilfunknetz bereitgestellt werden. Die erste und die zweite Funkverbindung können auch über Mobilfunknetze unterschiedlicher Mobilfunkbetreiber bereitgestellt werden.

Die Endgeräte senden und empfangen Daten in Echtzeit bzw. in einem permanenten Datenstrom. Voraussetzung dafür ist, dass die MNO die Funktionalität der Network-API an diesem Standort und für diese SIM-Karte unterstützen. In diesem Falle kann das hier vorliegende Verfahren auch MNO-übergreifend funktionieren.

Bei Echtzeitverbindungen für (Sprache, HD-Video (High Definition)) ist das erneute Senden (Data Repetition, Retransmissionen) der Informationen theoretisch möglich, aber aus Sicht der Anwender nicht praktikabel, weil das Risiko besteht, dass das Gesamtsystem (bestehend aus der Kette von Applikation, Gerät, Netzwerke, Cloud, Security/Sicherheit) insgesamt zu träge wird. Daher findet dieser Ansatz keine Anwendung. Betrachtet werden im Folgenden nur die Verbindung vom Gerät über Mobilfunk. Sollte das Gerät lokal zusätzlich WLAN oder BLE Bluetooth Low Energy) nutzen, so werden diese lokalen Latenzen als vernachlässigbar betrachtet. Die Ende-zu-Ende-Latenzzeit zwischen Applikation und den dezentralen Geräten wird als nahezu konstant angesehen, wenn das Netzwerk entsprechende Ressourcen über QoS/QoD bereitstellt.

Für die Überwachung des Datenflusses bei Verbindungen über mehrere Netzwerke gibt es bereits etablierte Verfahren für Flusskontrolle und den Umgang mit Paketverlusten usw. Ausführungsbeispiele können diese Verfahren ergänzen, insbesondere um die Möglichkeit in Mobilfunknetzen gesicherte Bandbreite für verschiedene Geräte zu erhalten, die in einer Applikation gemeinsam genutzt werden. Beispiele dafür wären Telemedizin oder Anlernen von Mensch-Maschine-Interaktion in Produktionsbereichen. Zumindest in manchen Ausführungsbeispielen erfasst die gemeinsame Anwendung Daten von dem ersten Endgerät und von dem zweiten Endgerät und stellt diese synchronisiert dar.

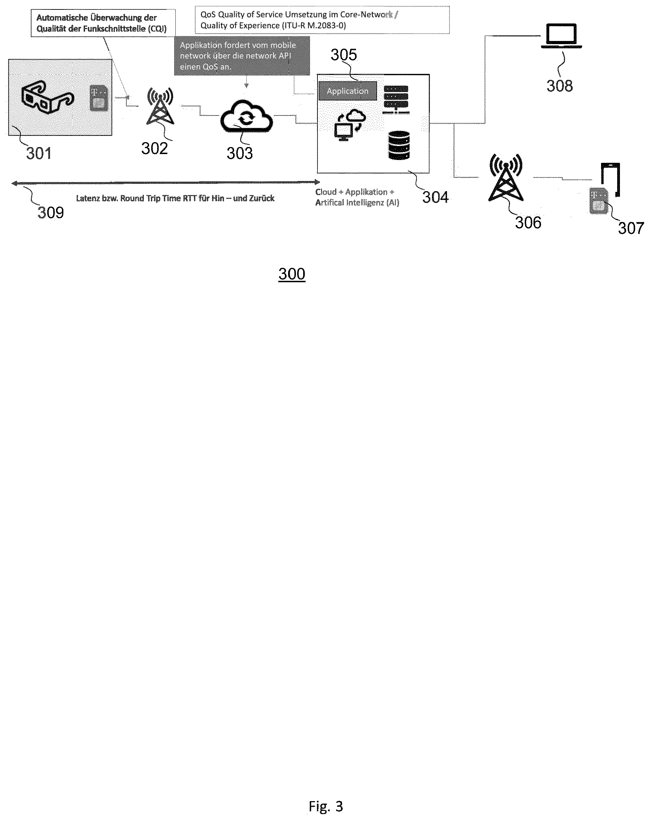

Fig. 3 zeigt ein Beispiel zur Veranschaulichung von Latenzen in einem Kommunikationsnetz 300. Auf der linken Seite der Fig. 3 ist eine AR-Brille 301 (engl. Augmented Reality, etwa ergänzte oder erweiterte Realität) gezeigt, die über ein 4G Modem verfügt und mit dem Mobilfunksystem 302, 303 über eine Funkverbindung kommuniziert. Das Mobilfunksystem bietet eine automatische Überwachung der Qualität der Funkschnittstelle. Dies kann beispielsweise über den Parameter CQI (Channel Quality Indicator, Indikator für die Kanalqualität) erfolgen. Das Mobilfunksystem 302, 303 (Zugangsnetz 302 (auch RAN, Radio Access Network), Kernnetz 303) ist wiederum über sein Kern-Netzwerk 303, z.B. 3GPP CN (Core Network) oder ein Backbone-Netzwerk, mit einer Netzwerk-Cloud (Internet) 304 verbunden. Hier können vielerlei Applikationen und auch Instanzen mit künstlicher Intelligenz eingebunden sein. Darunter kann beispielsweise in einem Rechenzentrum die gemeinsame Applikation 305 eingebunden sein, die von dem Mobilfunksystem 302, 303 über eine entsprechende API eine gewisse Verbindungsqualität (QoS) anfordert. Die QoS-Umsetzung im Core-Network 304/Quality of Experience kann dabei gemäß ITU-R M.2083-0 erfolgen. Über das Kernnetz 305 können weitere Mobilfunkzugriffnetze 306, darüber weiteren Endgeräte 307 (Smartphone, Tablet), sowie weitere Server 308 (Festnetz) angebunden sein. Die Fig 3 illustriert mit dem Pfeil 309 die Latenz bzw. Round-Trip-Time (RTT, Verzögerung für Hin- und Rückweg).

Im Mobilfunknetzwerk gibt es im 3GPP-Standard Mechanismen, die dafür sorgen, dass die maximale Datenrate an die Qualität der Verbindung optimal angepasst wird. 4G/5G Netze nutzen "Adaptive Modulation & Kodierung" auf der Funkschnittstelle. Das Verfahren sorgt dafür, dass die Übertragung und Datenmenge der Nutzdaten an die Kanalqualität (CQI =Channel Quality Indicator) automatisch angepasst wird. Im Allgemeinen gilt, dass eine gute Qualität eine hohe Datenrate und eine schlechte Qualität eine geringere Datenrate ermöglicht. Die CQI-Information wird im Mobilfunknetzwerk über den Physical Uplink Control Channel (PUCCH, Physikalischer Kontrollkanal der Aufwärtsstrecke), ein Kontrollkanal in der Aufwärtsstrecke von dem Endgerät hin zur Basisstation, übertragen. Darüber hinaus kann über eine Network-API eine minimal garantierte Bandbreite für eine Funkverbindung angefordert werden (QoD/QoS).

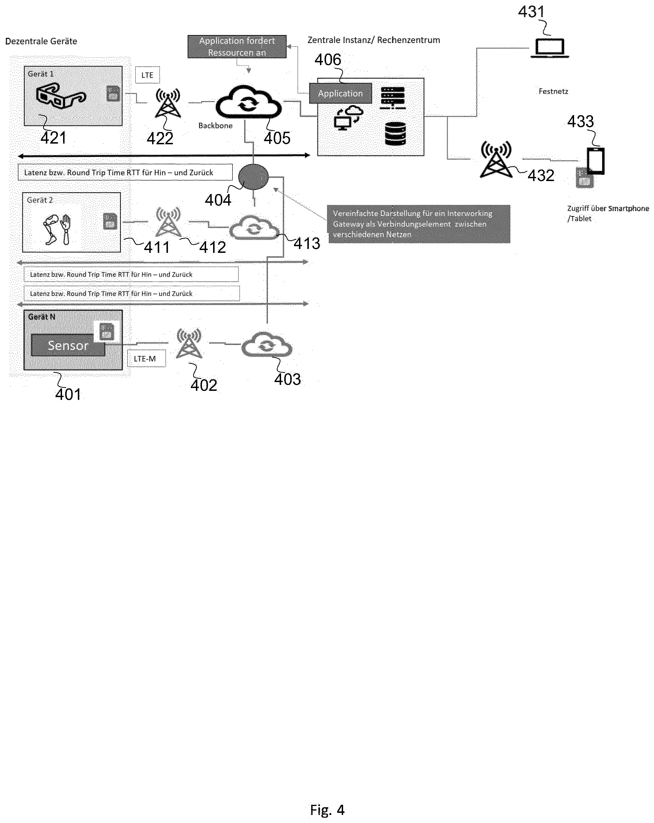

Fig. 4 zeigt ein Beispiel zur Konfiguration von mehreren Funkverbindungen über verschiedene Netze in einem Ausführungsbeispiel. In diesem Ausführungsbeispiel wird eine Anwendung betrachtet, bei der das erste Endgerät und das zweite Endgerät der gemeinsamen Anwendung unterschiedliche Sensordaten liefern. Die Fig. 4 zeigt links unten eine erstes Endgerät 401 mit einem Sensor, das Sensordaten liefert und diese über ein erstes Mobilfunksystem 402, 403, mit LTE-M (LTE-Zugriff für Maschinen) Zugriff, über ein Gateway 404 und ein Backbone-Netzwerk 405 an eine zentrale gemeinsame Applikation 406 liefert, die beispielsweise in einem Zentralserver oder einem Rechenzentrum ausgeführt wird. Das Gateway 404 ist hier eine vereinfachte Darstellung für ein Interworking-Gateway (eine Schnittstelle zwischen Netzkomponenten) als Verbindungselement zwischen verschiedenen Netzen. Diese Verbindung hat eine erste Latenz bzw. RTT. Die Fig. 4 zeigt ferner ein zweites Endgerät 411, das über ein zweites Mobilfunksystem 412, 413 (z.B. LTE), das Gateway 404, und das Backbone 405 mit der Applikation 406 verbunden ist. Diese Verbindung hat eine zweite Latenz bzw. RTT. Schließlich zeigt die Fig. 4 auch noch eine AR-Brille 421 als drittes Endgerät, das über ein drittes Mobilfunksystem 422, 405 and die Applikation 406 angebunden ist. Diese Verbindung hat eine dritte Latenz bzw. RTT. Die Fig. 4 zeigt darüber hinaus, dass an dem Zentralserver, bzw. dem Rechenzentrum, noch weitere Komponenten wie weitere Server 431 oder weitere Zugriffstechnologien 432 und Endgeräte 433 angebunden sein können.

Beispielsweise sind die Geräte 401, 411 und 421 über unterschiedliche Funkbänder im Mobilfunknetz aktiv und sollen in Echtzeit über die zentrale Applikation 406 zusammenarbeiten. Eine Herausforderung besteht darin, die Datenrate und Verbindung zwischen allen dezentralen Geräten 401, 411, 421 aufeinander abzustimmen. Dazu reserviert/konfiguriert die Applikation über das Backbone 405 die entsprechenden Ressourcen in den Mobilfunksystemen, nachdem die Leistungskapazitäten von den Endgeräten abgefragt wurden. Das Verfahren 10 umfasst in diesem Ausführungsbeispiel auch ein Übertragen von synchronisierten Daten von dem ersten Endgerät 401 über die erste Funkverbindung 402, 403 und von dem zweiten Endgerät 411 über die zweite Funkverbindung 412, 413 an die gemeinsame Anwendung 406 und Darstellen der synchronisierten Daten durch die gemeinsame Anwendung 406. Das Darstellen erfolgt vorliegend auf der AR-Brille 421.

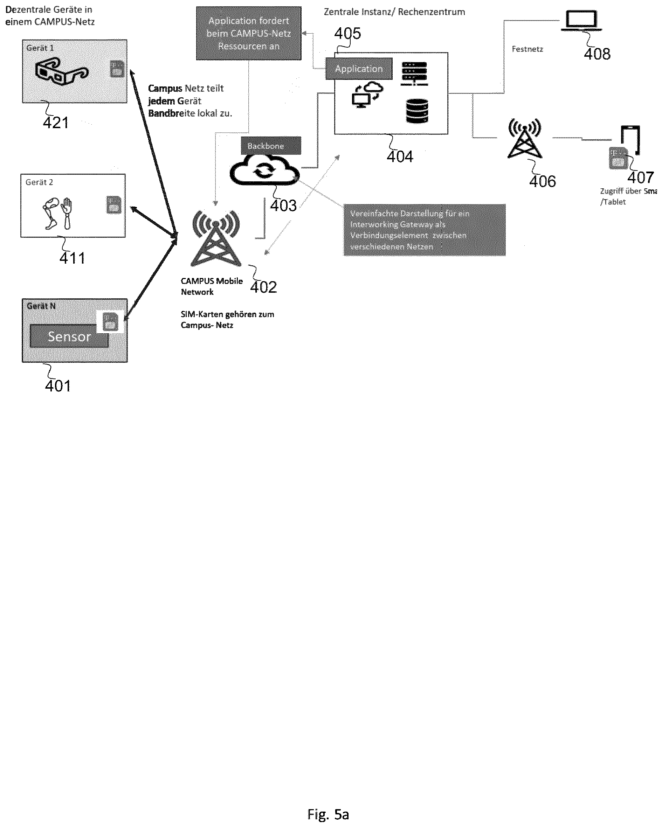

Fig. 5a zeigt ein Beispiel zur Konfiguration von mehreren Funkverbindungen über ein Campusnetz in einem Ausführungsbeispiel. Fig. 5a zeigt drei dezentrale Endgeräte 401, 411, 421 (Sensor 401, Bewegungserfassung 411 und VR-Brille 421) in einem Campusnetz, das durch das Zugangsnetz 402 bereitgestellt wird und das jedem Endgerät lokal eine Bandbreite zuteilt. Die SIM-Karten in den drei Endgeräten gehören zu dem Campus-Netz. Über das Backbone 403 ist ein Rechenzentrum oder ein Zentralserver 404 angebunden, wo die gemeinsame Applikation 405 ausgeführt wird. Wie in den vorangegangenen Ausführungsbeispielen können noch weitere Komponenten 406, 407, 408 an die Zentralinstanz 404 angebunden sein. Wieder sind die Geräte 401, 411, 421 über unterschiedliche Funkbänder im Mobilfunknetz 402 aktiv und sollen in Echtzeit über die zentrale Applikation 405zusammenarbeiten. Die Datenraten und Verbindungen zwischen allen dezentralen Geräten 401, 411, 421 werden vorliegend durch die gemeinsame Anwendung 405 und durch Reservierung der Ressourcen im Mobilfunknetz 402 abgestimmt. Ab dem Campus-Netzwerk 402 besteht eine Festnetzverbindung über das öffentliche Internet oder SD-WAN (Softwaredefiniertes Wide-Area Networking).

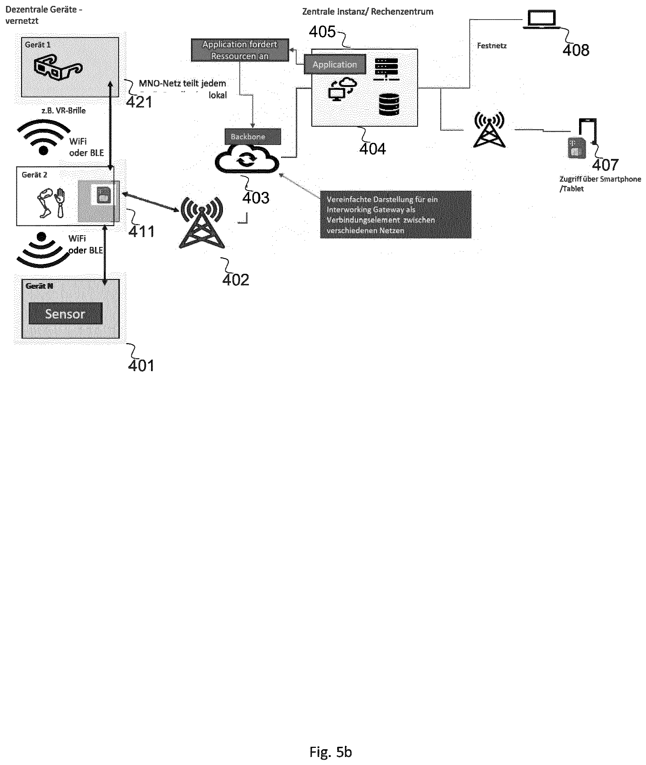

Fig. 5b zeigt ein Ausführungsbeispiel zur Konfiguration von mehreren Funkverbindungen unter Nutzung direkter Kommunikation. Die Fig. 5b zeigt die gleichen Komponenten wie die Fig. 5a. Der Unterschied besteht hier darin, dass die Endgeräte 401, 411, 412 hier so konfiguriert werden, dass diese direkt miteinander kommunizieren, beispielsweise über WLAN (WiFi, Wireless Fidelity), Bluetooth (BLE, Bluetooth Low Energy) oder auch Mobilfunk (Sidelink, Device-to-Device, D2D) und vorliegend nur das Endgerät 411 über Mobilfunk an die koordinierende gemeinsame Anwendung angebunden ist. Die Geräte 401 und 421 verbinden sich lokal mit dem Gerät 411 und das Gerät 411 sendet die Daten über das Mobilfunk-Netz 402, 403 an die Applikation 405. Die Datenrate und Verbindung zwischen allen dezentralen Geräten wird vom Gerät 411 geregelt und überwacht. Das Gerät 411 verfügt über entsprechende Software, Hardware und Rechenleistung.

Das Konfigurieren 14 der ersten und der zweiten Funkverbindung umfasst in diesem Ausführungsbeispiel ein Konfigurieren einer direkten Funkverbindung zwischen dem ersten Endgerät, z.B. 421 und dem zweiten Endgerät, z.B. 411. Das Verfahren 10 umfasst ferner ein Konfigurieren einer Funkverbindung zwischen der gemeinsamen Anwendung 405 und dem Endgerät 411. In weiteren Ausführungsbeispielen ist es auch denkbar, für die Endgeräte 401 und 421 Funkverbindungen über das Mobilfunknetz 402 zu der gemeinsamen Anwendung 405 zu konfigurieren. Die gemeinsame Anwendung 405 kann dann mit den Endgeräten über separate Funkverbindungen kommunizieren, wohingegen die Endgeräte untereinander direkt kommunizieren. Die Endgeräte werden aus Sicht der gemeinsamen Anwendung 405 dezentral vernetzt. Die direkte Kommunikation der Geräte untereinander kann QoS-Vorteile haben, insbesondere kürzere Latenzzeiten.

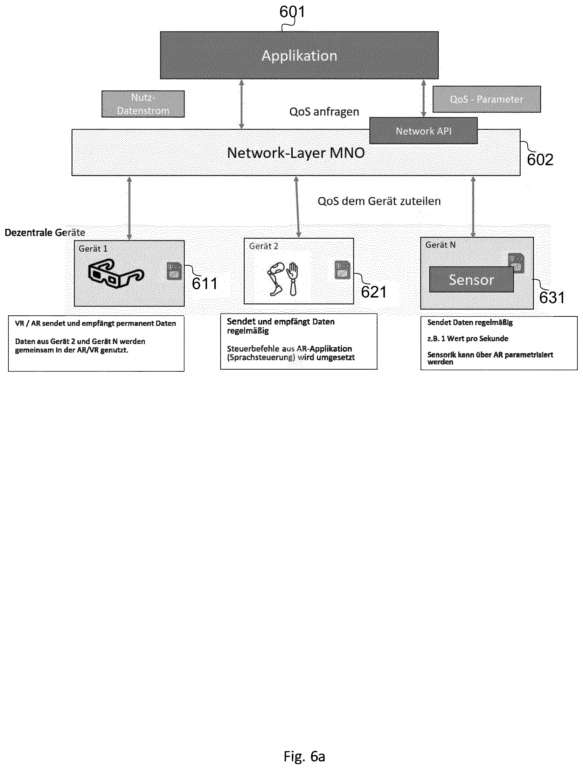

Fig. 6a illustriert eine Übersicht über Protokolle in einem Ausführungsbeispiel. Die Applikation 601 oben kommuniziert mit einem Network-Layer 602 eines MNO über eine Network API. Über das API werden QoS Parameter ausgehandelt bzw. vereinbart. Die Applikation erhält einen Nutzdatenstrom ebenfalls über die Netzwerkschicht 602. Die Fig. 6a zeigt unten die drei dezentralen Endgeräte 611, 621 und 631. Das Endgerät 611 ist dabei eine VR/AR-Brille, die permanent Daten sendet (z.B. Richtungs-Bewegungsdaten) und empfängt (Videodaten, Sensordaten). Das Endgerät 621 ist beispielsweise ein Exoskelett zur Steuerung von Gliedmaßen eines Patienten, das ebenfalls regelmäßig Daten sendet und empfängt. Dabei erhält das Endgerät 621 z.B. Steuerbefehle aus der AR-Applikation (Sprachsteuerung) und setzt diese um. Das Endgerät 631 sendet regelmäßig Sensordaten, z.B. 1 Wert pro Sekunde.

Dabei kann es sich um Sensorik handeln, über die die AR parametrisiert werden kann (z.B. Muskelaktivität des Patienten). Die Applikation kennt dabei die Identität der Geräte, ein Datenmodell & aktuelle Performance und fordert automatisch QoS über die Network API von der Netzwerkschicht 602 an. In diesem Ausführungsbeispiel können das erste und/oder das zweite Endgerät Information über einen Stellgrad eines Aktors (Exoskelett) an die gemeinsame Anwendung übermitteln. Der Aktor (Exoskelett) kann dabei ferngesteuert sein. Z.B. wird über die Muskelaktivität festgestellt, dass der Patient sich bewegen möchte und dann darauf basierend das Exoskelett angesteuert. Über die VR-Brille kann dann die Bewegung bzw. der Status der Gliedmaßen dargestellt werden. Insofern umfasst das Verfahren 10 in diesem Ausführungsbeispiel auch ein Empfangen von ersten Daten von dem ersten Endgerät 631 und ein Empfangen von zweiten Daten von dem zweiten Endgerät (Stellgrad). Das Verfahren 10 umfasst ferner ein Darstellen von synchronisierten ersten und zweiten Daten auf einem dritten Endgerät 611 durch die gemeinsame Anwendung 601.

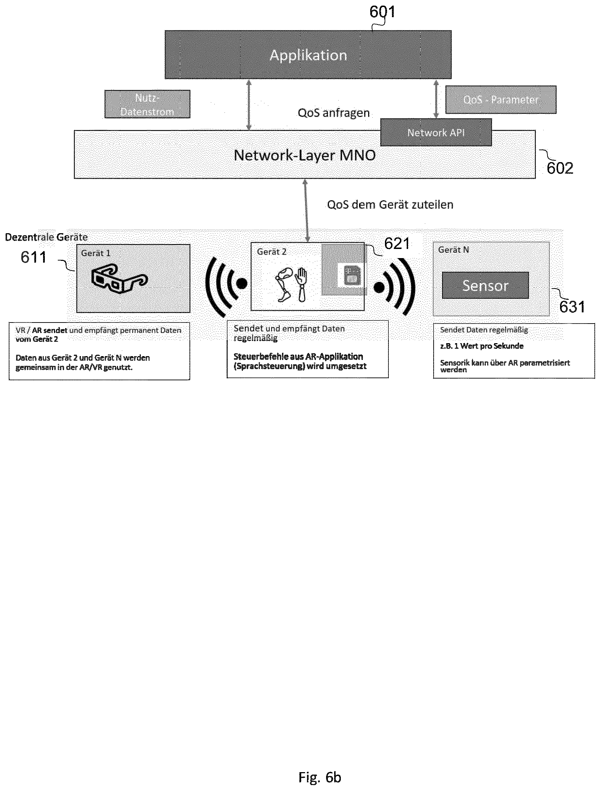

Fig. 6b zeigt eine Übersicht über Protokolle unter Nutzung direkter Kommunikation in einem Ausführungsbeispiel. Die Fig. 6b zeigt die gleichen Komponenten wie die Fig. 6a. Im Unterschied zur Fig. 6a wird jedoch in Fig. 6b eine direkte Verbindung zwischen den Endgeräten 611, 621 und 631 benutzt. Das Endgerät 621 bildet dann die Anbindung über den Netzwerk-Layer 602 zur gemeinsamen Anwendung 601. In diesem Ausführungsbeispiel kommuniziert die gemeinsame Anwendung 601 über das Endgerät 621 mit den Endgeräten 611 und 631. In anderen Ausführungsbeispielen ist es auch denkbar, dass jedes Endgerät 611, 621, 631 neben den direkten Funkverbindungen untereinander noch zusätzlich eine Funkverbindung über den Netzwerk-Layer 602 zu der gemeinsamen Anwendung 601 hat. Die gemeinsame Anwendung 601 kann dann die Koordination und Konfiguration über separate Funkverbindungen vornehmen.

Beispielsweise sendet der Sensor 631 regelmäßig Daten, z.B. 1 Wert pro Sekunde. Die Sensorik kann über AR parametrisiert werden. Das Endgerät 621, z.B. ein Exoskelett, sendet und empfängt Daten ebenfalls regelmäßig. Steuerbefehle aus der AR-Applikation (Sprachsteuerung) werden hier umgesetzt. VR/AR 611 sendet und empfängt permanent Daten an/vom Endgerät 621. Die Daten von Endgerät 621 und von Endgerät 631werden gemeinsam in der AR/VR 611 genutzt und dargestellt.

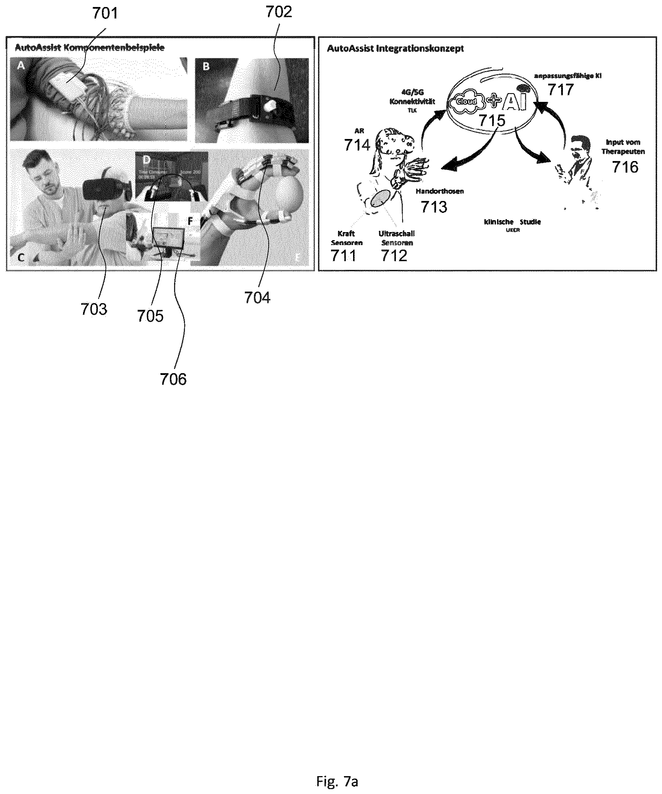

Fig. 7a zeigt eine Darstellung eines Ausführungsbeispiels in der medizinischen Therapie. Die Fig. 7a zeigt links Beispiele verschiedener Endgeräte: Ein Muskelaktivitätssensor 701, einen weiteren Muskelaktivitätssensor 702, eine VR/AR-Brille 703 und ein Exoskelett 704 für eine Hand des Patienten. Die VR-Brille 703 stellt dem Patienten dabei eine Trainingssituation 705 vor, die von einer zentralen Anwendung 706 unter Berücksichtigung aller Sensordaten aus koordiniert wird. Die Fig. 7a zeigt auf der rechten Seite einen Patienten 710, der an seinem Arm Kraftsensoren 711 und Ultraschallsensoren 712 befestigt hat. Der Patient verfügt darüber hinaus über Handorthosen 713 (Exoskelett) und eine AR-Brille 714. Diese Endgeräte sind mit 4G/5G Konnektivität ausgerüstet und mit einer Cloud 715 mit künstlicher Intelligenz 717 verbunden, wo die gemeinsame oder zentrale Anwendung ausgeführt wird. Ein Arzt oder Therapeut 716 überwacht die Therapie und liefert ggf. weitere Eingaben, um die anpassungsfähige künstlichen Intelligenz (KI) 717 zu trainieren.

Die Fig. 7a zeigt eine mögliche Anwendung in der Telemedizin, bei der der Mensch (Anwender) verschiedene vernetzte Geräte 711, 712, 713, 714 gleichzeitig nutzt, um eine Therapie durchzuführen. Diese Anwendung funktioniert nur dann für den Anwender zufriedenstellend, wenn die Endgeräte rechtzeitig genügend Bandbreite vom Netzwerk zur Verfügung gestellt bekommen. Dabei kann sich der Anwender in verschiedenen Netzwerken befinden, also sowohl zuhause als auch unterwegs (beispielsweise im Hotel) oder aber auch in einem Campus-Netz in einer Klinik befinden und die Übungen/Therapieplan ausführen.

Ein erstes Endgerät ist beispielsweise ein Aktivitätssensor 701, 702 zur Erfassung einer Muskelaktivität eines Patienten und das zweite Endgerät ein Bewegungssensor 704 zur Erfassung einer Bewegung eines Patienten. Das dritte Endgerät ist z.B. ein Videogerät 703 zur Darstellung der Bewegung in einer virtuellen Umgebung. In dem Ausführungsbeispiel der Fig. 7a misst der Aktivitätssensor 701, 702 eine Muskelaktivität des Patienten und der Bewegungssensor 704 erfasst eine Bewegung einer Hand des Patienten über ein Exoskelett mit Sensoren.

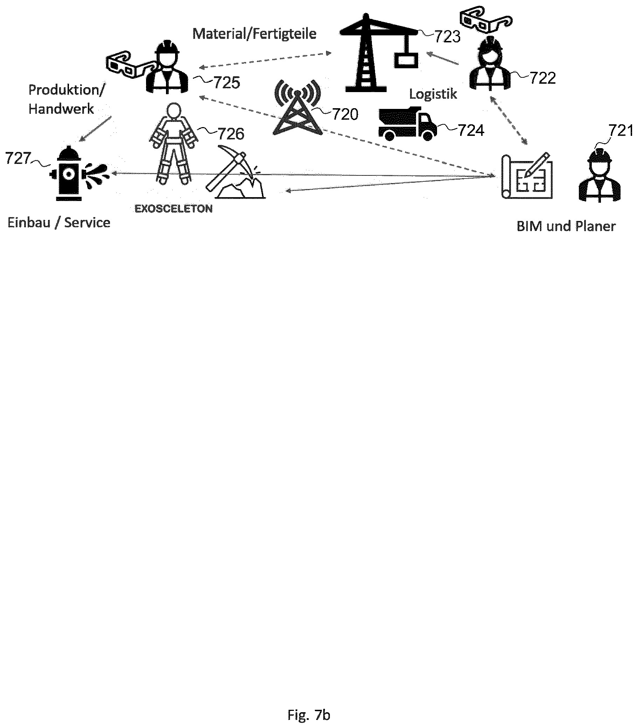

Fig. 7b zeigt eine Darstellung eines Ausführungsbeispiels in der Produktion oder einer Baustelle. Fig 7b zeigt mehrere Instanzen, die über ein Mobilfunknetz 720 (potenziell auch über mehrere Mobilfunknetze) miteinander kommunizieren. Dabei befindet sich rechts ein BIM (Building Information Modeling) und Planer 721, der einen Kranfahrer 722 (mit AR/VR-Brille) mit Kran 723, die Logistik 724 der Baustelle, und Handwerker 725 und 726 sowie diverse Sensorik 727 kontrolliert.

Fig. 7b zeigt ein Szenario in Produktion, Bau, Handwerk etc., bei dem verschiedene Personen ohne Sichtkontakt zusammenarbeiten müssen. Der Planer 721 sieht den Fortschritt und kann so Einfluss nehmen auf die Logistik 724 und die Handwerker 722, 725, 726 und ggf. zusätzliche Informationen in Echtzeit zur Verfügung zu stellen. Das Exoskelett des Handwerkers 726 unterstützt dabei die für die Tätigkeit benötigte Bewegung. Die Information dafür bekommt das Exoskelett aus einer gemeinsamen Applikation. Zusätzlich kann über eine weitere Mobilfunkverbindung den Monteuren 725 via VR-Information zu den Montageschritten übermittelt werden, die mit der Sensorik oder Erfassung von Messwerten 727 synchronisiert wird. Denkbar sind auch Szenarien in einer Fertigung. Dort interagieren Personen mit Maschinen und werden dabei beispielsweise von Exoskeletten unterstützt. Die Applikation (z.B. MES-System, Manufacturing Execution System) kennt den Fertigungsplan und gibt den Monteuren Anweisungen. Die einzelnen Mobilfunkverbindungen können über QoD entsprechend konfiguriert werden. Dabei können Monteure mit zusätzlichen Exoskeletten und VR ausgestattet werden. Das Exoskelett unterstützt dabei die Tätigkeit punktgenau. Im Hintergrund kann dabei parallel die Logistik "just in time" organisiert werden. Das Mobilfunknetzwerk stellt allen Beteiligten entsprechende Ressourcen zur Verfügung. Über die gemeinsame Anwendung können die entsprechenden Funkverbindungen bedarfsgerecht (QoD) konfiguriert und koordiniert werden.

Im Folgenden werden die Mechanismen zur Sicherstellung einer Verbindungsqualität in Mobilfunksystemen erläutert. Ein bekannter Mechanismus ist Quality on Demand für erweiterte Kommunikation (QoD_E, Qualität auf Abruf). Diese Art von QoD ist für Kontrolldaten gedacht. Ziel ist es für niedrige Datenraten (wie sie sich auf Kontrollkanälen erwarten lassen) möglichst niedrige Latenzzeiten bei hoher Zuverlässigkeit bereitzustellen. Ein Anwendungsfeld ist der Zahlungsverkehr. Kunden in diesem Bereich sind Point-of-Sales-Betreiber (Verkäufer). Mit QoD E können diese Kunden Investitionen sparen, weil sie keine eigene separate Infrastruktur aufbauen müssen. Ein weiteres Anwendungsfeld sind Multiplayer-Spiele. Der Austausch von Steuerbefehlen und die Bereitstellung eines Audiostroms mit geringer Latenz ist der Schlüssel für jeden professionellen oder semiprofessionellen E-Gamer. Weitere Anwendungsfelder sind Fernsteuerung/Controlling, wo Autos, Drohnen, Roboter oder AGVs (von engl. Automated Guided Vehicle) auf eine Verbindung zu einem Server angewiesen sind, und eine QoD_E für einen zuverlässigen Betrieb nutzen können.

Weitere Fälle nutzen QoD mit kleinen, mittleren oder hohen Datenraten (QoD_S, QoD_M, QoD_L) für Anwendungen, die mehr Bandbreite benötigen. Hier wird eine bestimmte Bandbreite angeboten. Ein Beispiel ist eine Live-Videoproduktion und Streaming. In diesem Bereich können Live-Content-Produktionen wie beispielsweise für Nachrichten fallen. Mit einer zuverlässigen Bandbreite können die Produzenten ihren Kunden einen stabilen Service bieten. In der Wartung und Fertigung können diese Dienste ebenfalls genutzt werden. Die Produktion und Wartung entwickeln sich in Richtung assistierte Produktion und Wartung. In manchen Fällen mit einem echten Benutzer auf der anderen Seite, aber manchmal auch nur mit einem anderen System, das unterstützt. Mit QoD können diese Dienste in stabiler Weise genutzt werden. Ein weiteres Anwendungsfeld sind Videokonferenzen. Die Teilnahme an einer Videokonferenz von unterwegs aus kann eine Herausforderung sein. QoD kann sicherstellen, dass das Netzwerk ausreichend Bandbreite zur Verfügung stellt.

Dabei können die verschiedenen QoS-Profile definiert werden. Z.B. wird für QoS_E festgelegt, dass die Latenz auch bei Überlastung stabil bleicht (bei einem Durchsatz bis zu einer bestimmten Grenze, z. B.500kbps). Die Bitrate der Anwendung sollte diese Grenze nicht überschreiten. Der Dienst wird nur bereitgestellt, wenn sich das UE innerhalb des geografischen Gebiets befindet, gemäß der Vereinbarung mit dem CSP (Communication Service Provider). Der Zugang zum Netzdienst ist auf eine maximale Anzahl von gleichzeitigen Sitzungen beschränkt.

Für QoS_L wird der Durchsatz des 5G-Systems bis zu einer bestimmten Obergrenze priorisiert (z.B. 20Mbps) oder ohne eine explizite Obergrenze. Bei hoher Last kann der Durchsatz begrenzt und auf einen niedrigeren effektiven Durchsatz herabgesetzt werden (ohne Mindestniveau). Der Dienst wird nur angeboten, wenn sich das UE innerhalb des Heimatnetzes befindet. Der Zugang zum Netzdienst ist auf eine maximale Anzahl von gleichzeitigen Sitzungen beschränkt.

Für QoS_M wird der Durchsatz des 5G-Systems bis zu einer bestimmten mittleren Grenze priorisiert (z. B. 8Mbps). Bei hoher Last kann der Durchsatz an der Grenze gedeckelt sein und auf einen niedrigeren effektiven Durchsatz herabgesetzt werden (ohne Mindestniveau). Der Dienst wird nur angeboten, wenn sich das UE sich innerhalb des Heimatnetzes befindet. Der Zugang zum Netzdienst ist auf eine maximale Anzahl von gleichzeitigen Sitzungen beschränkt.

Für QoS_S wird der Durchsatz des 5G-Systems bis zu einer bestimmten Untergrenze priorisiert (z. B. 4Mbps). Bei hoher Last kann der Durchsatz an der Grenze beschränkt werden und kann auf einen niedrigeren effektiven Durchsatz herabgesetzt werden (ohne Mindestniveau). Auch hier wird der Dienst nur angeboten, wenn sich das UE sich innerhalb des Heimatnetzes befindet. Der Zugang zum Netzdienst ist auf eine maximale Anzahl von gleichzeitigen Sitzungen beschränkt.

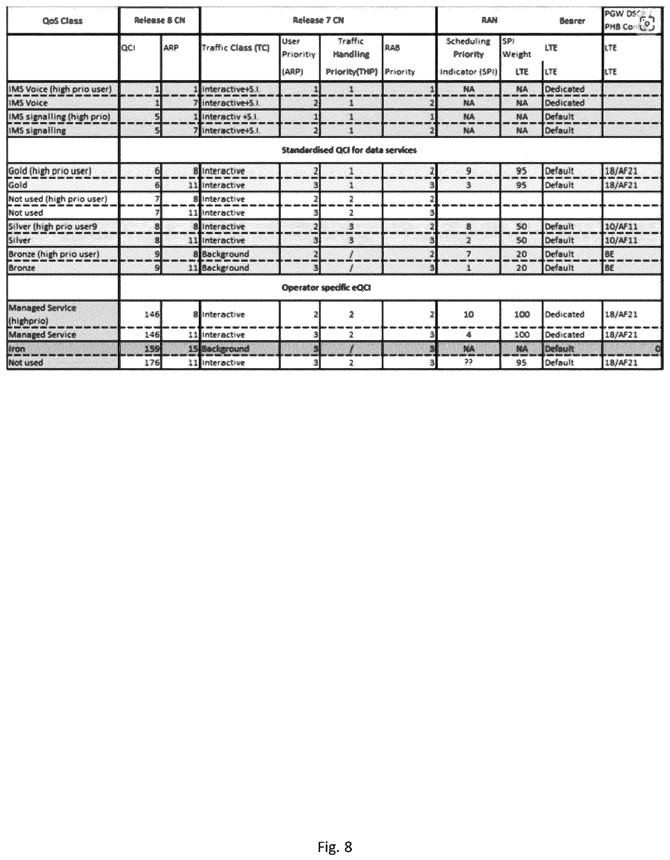

Fig. 8 stellt einen Überblick über QoS-Mechanismen in 3GPP dar, wobei hier nur eine Übersicht gegeben werden soll. Weitere Details finden sich in den jeweiligen 3GPP Spezifikationen, z.B. 3GPP TS 23.203. Fig. 8 zeigt eine Tabelle mit den QoS-Klassen (QoS Class), z.B. IMS (IP Multimedia System) Voice (Sprachdienst) und Signaling (Signalisierung), jeweils mit normaler und hoher Priorität usw. So können auch verschiedene Nutzergruppen mit Prioritäten definiert werden (Gold, Silber, Bronze). Im Release 8 für das CN (Kern-Netz, Core Network) werden QCI (QoS class identifier, Klassenidentifikation) und ARP (Allocation and Retention Priority, Zuweisungs- und Beibehaltungspriorität) unterschieden. ARP wird im Teilnehmerprofil in HSS (Home Subscriber Server, Heim-Server eines Nutzers) auf APN-Basis (Access Point Name, Name des Zugriffspunktes) gespeichert. Er kann je nach Benutzerpriorität einen Wert zwischen 1 und 15 annehmen (d. h. Gold, Silber und Bronze). Der Hauptzweck des ARP besteht darin, zu entscheiden, ob ein Antrag auf Einrichtung/Änderung eines Inhabers im Falle einer Ressourcenbeschränkung angenommen oder abgelehnt werden kann (d. h. Zugangskontrolle). Der Hauptparameter zur Steuerung der Priorität des Dienstes im Funknetz ist die Gewichtung des Sheduling Priority Indicator (SPI) wie im Folgenden noch näher beschrieben wird. Die Fig. 8 zeigt auch eine Übersicht über Release 7 CN und RAN (Radio Access Network) SPI. Für weitere Details wird auf die 3GPP Spezifikationen verwiesen.

In einem Scheduler werden die Funkressourcen für die einzelnen Dienste zugewiesen. Neben anderen Parametern erfolgt dies in Abhängigkeit des SPI. Dabei kann beispielsweise die folgende Tabelle benutzt werden, um QCI entsprechende SPI zuzuordnen:

| QCI | SPI Weight (Gewichtung) | User Class (Nutzerklasse) |
|---|---|---|
| 6 | 95% | Gold |
| 8 | 50% | Silber |
| 9 | 20% | Bronze |
| 146 | 100% | Managed Service (verwalteter Dienst) |
| 159 | 5% | HA Iron (High Availability, nur bei hoher Verfügbarkeit, Eisenklasse) |

Die SPI-Gewichtung definiert einen Gewichtungsfaktor für den Funkplaner (Beispiel: SPI-Gewichtung 100 im Vergleich zu SPI-Gewichtung 20 soll eine 5-mal höhere Scheduling-Priorität haben als SPI-Gewichtung 20, d.h. der Teilnehmer erhält eine 5-mal höhere Datenrate unter der Annahme, dass die gleichen Funkbedingungen und die gleiche maximale Datenrate erforderlich sind. Ein Bespiel für einen Parametersatz eines 3GPP QoS Profils (QoS_L), wäre das folgende Profil:

| | |
|---|---|
| QoD duration: | up to 180 minutes |
| Freeze time: | 0 minutes |
| Latency: | best effort |
| Jitter: | accepted |
| Packetloss: | accepted |
| QCI | 8 |
| MAX Uplink | 1 Gbit/sec |
| MAX Downlink: | 2,2 Gbit/sec |

Die Geschwindigkeitsreduzierung oder die Schließung der API muss erfolgen, nachdem das definierte verbrauchte Volumen verwendet wird (um einen Missbrauch von QoD L zu vermeiden). Ausführungsbeispiele können solche QoS-Profile nutzen, um die zumindest zwei Funkverbindungen möglichst gleich und den Erfordernissen der gemeinsamen Anwendung nach zu konfigurieren.

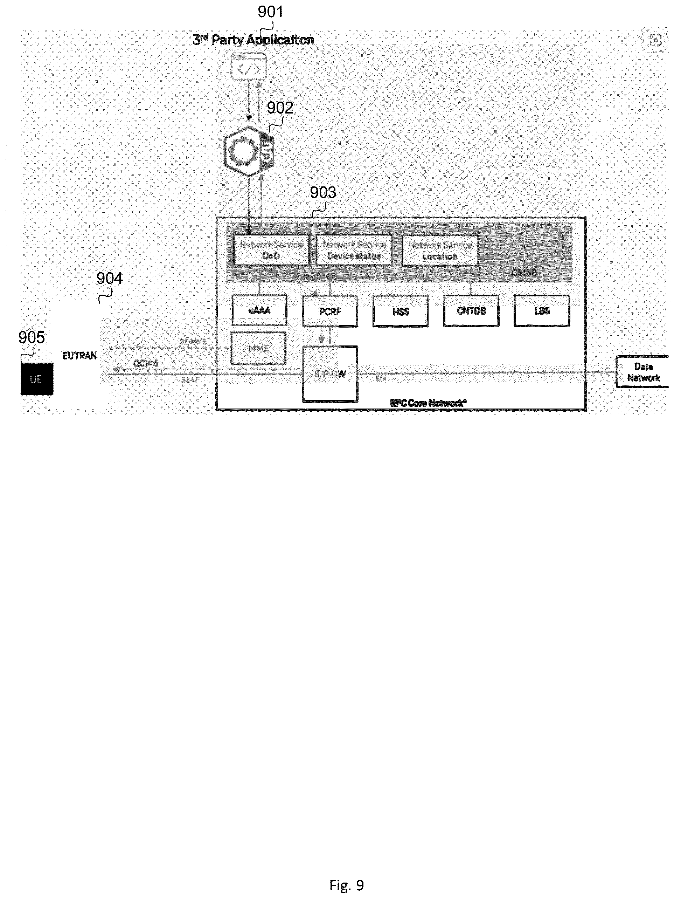

Fig. 9 zeigt eine mögliche Implementierung einer Funkverbindungskonfiguration in einem Ausführungsbeispiel. Dabei fragt eine gemeinsame Applikation 901 über ein Gateway 902 bei einem EPC (Evolved Packet Core, CN) 903 einen entsprechenden Datendienst über ein E-UTRAN 904 zur einer Mobile 905 an. Dabei wird QCI=6 verwendet. QoS Class Identifier (QCI) ist ein Mechanismus, der in 3GPP Long Term Evolution (LTE)-Netzen verwendet wird, um sicherzustellen, dass dem Carrier-Datenverkehr eine angemessene Quality of Service (QoS) zugewiesen wird. Unterschiedlicher Carrier-Datenverkehr erfordert unterschiedliche QoS und damit unterschiedliche QCI-Werte. Das Ausführungsbeispiel der Fig. 9 illustriert dabei, wie die Applikation 901 über das CN eine bestimmte Konfiguration der Funkverbindung anfragen kann. Die Fig. 9 illustriert darüber hinaus diverse Komponenten des EPC und Schnittstellen, die von 3GPP in den entsprechenden Spezifikationen im Details definiert sind, siehe z.B. 3GPP TS 23.501 V18.4.0 (2023-12).

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Beispiele können weiterhin ein (Computer-)Programm mit einem Programmcode zum Ausführen eines oder mehrerer der obigen Verfahren sein oder sich darauf beziehen, wenn das Programm auf einem Computer, einem Prozessor oder einer sonstigen programmierbaren Hardwarekomponente ausgeführt wird. Schritte, Operationen oder Prozesse von verschiedenen der oben beschriebenen Verfahren können also auch durch programmierte Computer, Prozessoren oder sonstige programmierbare Hardwarekomponenten ausgeführt werden. Beispiele können auch Programmspeichervorrichtungen, z.B. Digitaldatenspeichermedien, abdecken, die maschinen-, prozessor- oder computerlesbar sind und maschinenausführbare, prozessorausführbare oder computerausführbare Programme und Anweisungen codieren beziehungsweise enthalten. Die Programmspeichervorrichtungen können z.B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren, Steuereinheiten, feld-programmierbare Logik-Arrays ((F)PLAs = (Field) Programmable Logic Arrays), feld-programmierbare Gate-Arrays ((F)PGA = (Field) Programmable Gate Arrays), Grafikprozessoren (GPU = Graphics Processor Unit), anwendungsspezifische integrierte Schaltungen (ASIC = application-specific integrated circuit), integrierte Schaltungen (IC= Integrated Circuit) oder Ein-Chip-Systeme (SoC = System-on-a-Chip) abdecken, die zum Ausführen der Schritte der oben beschriebenen Verfahren programmiert sind.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann. Ferner ist zu beachten, dass - obwohl ein abhängiger Anspruch sich in den Ansprüchen auf eine bestimmte Kombination mit einem oder mehreren anderen Ansprüchen bezieht - andere Beispiele auch eine Kombination des abhängigen Anspruchs mit dem Gegenstand jedes anderen abhängigen oder unabhängigen Anspruchs umfassen können. Solche Kombinationen werden hiermit explizit vorgeschlagen, sofern nicht im Einzelfall angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt als abhängig von diesem anderen unabhängigen Anspruch definiert ist.

## Patentansprüche

1. Ein Verfahren (10) zur Konfiguration von Funkverbindungen für zwei oder mehr Endgeräte, die von einer gemeinsamen Anwendung benutzt werden, das Verfahren (10) umfassend
Erhalten (11) einer Information über eine erste Leistungskapazität eines ersten Endgerätes;
Erhalten (12) einer Information über eine zweite Leistungskapazität eines zweiten Endgerätes;
Bestimmen (13) einer möglichen Verbindungsqualität, die den Leistungskapazitäten des ersten Endgeräts und des zweiten Endgeräts entspricht; und
Konfigurieren (14) einer ersten Funkverbindung zwischen der gemeinsamen Anwendung und dem ersten Endgerät und einer zweiten Funkverbindung zwischen der gemeinsamen Anwendung und dem zweiten Endgerät basierend auf der Verbindungsqualität.

2. Das Verfahren (10) gemäß Anspruch 1, wobei die Information über die Leistungskapazität ein oder mehrere Elemente der Gruppe von einer maximalen Datenrate, einer Latenz, einer Datenfehlerrate und einer Speicherkapazität umfassen.

3. Das Verfahren (10) gemäß einem der Ansprüche 1 oder 2, wobei das Konfigurieren (14) der ersten und zweiten Funkverbindung ein Synchronisieren von Daten des ersten und des zweiten Endgerätes umfasst.

4. Das Verfahren (10) gemäß einem der Ansprüche 1 bis 3, wobei die erste und die zweite Funkverbindung über ein Mobilfunknetz bereitgestellt werden.

5. Das Verfahren (10) gemäß einem der Ansprüche 1 bis 3, wobei die erste und die zweite Funkverbindung über Mobilfunknetze unterschiedlicher Mobilfunkbetreiber bereitgestellt werden.

6. Das Verfahren (10) gemäß einem der Ansprüche 1 bis 5, wobei die gemeinsame Anwendung Daten von dem ersten Endgerät und von dem zweiten Endgerät erfasst und diese synchronisiert darstellt.

7. Das Verfahren (10) gemäß einem der Ansprüche 1 bis 6, wobei das erste Endgerät und das zweite Endgerät der gemeinsamen Anwendung unterschiedliche Sensordaten liefern.

8. Das Verfahren (10) gemäß einem der Ansprüche 1 bis 7, ferner umfassend Übertragen von synchronisierten Daten von dem ersten Endgerät über die erste Funkverbindung und von dem zweiten Endgerät über die zweite Funkverbindung an die gemeinsame Anwendung und Darstellen der synchronisierten Daten durch die gemeinsame Anwendung.

9. Das Verfahren (10) gemäß einem der Ansprüche 1 bis 8, wobei das erste und/oder das zweite Endgerät Information über einen Stellgrad eines Aktors an die gemeinsame Anwendung übermittelt und wobei der Aktor ferngesteuert ist.

10. Das Verfahren (10) gemäß einem der Ansprüche 1 bis 9, wobei das Konfigurieren (14) der ersten und der zweiten Funkverbindung ein Konfigurieren einer direkten Funkverbindung zwischen dem ersten Endgerät und dem zweiten Endgerät umfasst und ferner ein Konfigurieren einer Funkverbindung zwischen der gemeinsamen Anwendung und dem ersten Endgerät und/oder dem zweiten Endgerät.

11. Das Verfahren (10) gemäß einem der Ansprüche 1 bis 10, ferner umfassend
Empfangen von ersten Daten von dem ersten Endgerät;
Empfangen von zweiten Daten von dem zweiten Endgerät; und
Darstellen von synchronisierten ersten und zweiten Daten auf einem dritten Endgerät durch die gemeinsame Anwendung.

12. Das Verfahren (10) gemäß Anspruch 9, wobei das erste Endgerät ein Aktivitätssensor zur Erfassung einer Muskelaktivität eines Patienten ist, wobei das zweite Endgerät ein Bewegungssensor zur Erfassung einer Bewegung eines Patienten ist und wobei das dritte Endgerät ein Videogerät zur Darstellung der Bewegung in einer virtuellen Umgebung ist.

13. Das Verfahren (10) gemäß Anspruch 10, wobei der Aktivitätssensor eine Muskelaktivität des Patienten misst und der Bewegungssensor eine Bewegung einer Hand des Patienten über ein Exoskelett mit Sensoren erfasst.

14. Ein Computerprogramm mit einem Programmcode zur Durchführung eines der Verfahren (10) gemäß einem der Ansprüche 1 bis 13, wenn der Programmcode auf einem Computer, einem Prozessor oder einer programmierbaren Hardwarekomponente ausgeführt wird.

15. Eine Vorrichtung (20) zur Konfiguration von Funkverbindungen für zwei oder mehr Endgeräte, die von einer gemeinsamen Anwendung benutzt werden, mit
ein oder mehreren Schnittstellen (22), die zur Kommunikation mit einem oder mehreren Kommunikationssystemen ausgebildet sind; und
ein oder mehreren Signalverarbeitungskomponenten (24), die ausgebildet sind, um eines der Verfahren gemäß einem der Ansprüche 1 bis 13 auszuführen.

## Geänderte Patentansprüche

### Geänderte Patentansprüche gemäss Regel 137(2) EPÜ.

1. Ein Verfahren (10) zur Konfiguration von Funkverbindungen für zwei oder mehr Endgeräte, die von einer gemeinsamen Anwendung benutzt werden, das Verfahren (10) umfassend
Erhalten (11) einer Information über eine erste Leistungskapazität eines ersten Endgerätes;
Erhalten (12) einer Information über eine zweite Leistungskapazität eines zweiten Endgerätes;
Bestimmen (13) einer möglichen Verbindungsqualität, die den Leistungskapazitäten des ersten Endgeräts und des zweiten Endgeräts entspricht zur Koordination der Verbindungsqualität beider Endgeräte; und
Konfigurieren (14) einer ersten Funkverbindung zwischen der gemeinsamen Anwendung und dem ersten Endgerät und einer zweiten Funkverbindung zwischen der gemeinsamen Anwendung und dem zweiten Endgerät basierend auf der Verbindungsqualität.

2. Das Verfahren (10) gemäß Anspruch 1, wobei die Information über die Leistungskapazität ein oder mehrere Elemente der Gruppe von einer maximalen Datenrate, einer Latenz, einer Datenfehlerrate und einer Speicherkapazität umfassen.

3. Das Verfahren (10) gemäß einem der Ansprüche 1 oder 2, wobei das Konfigurieren (14) der ersten und zweiten Funkverbindung ein Synchronisieren von Daten des ersten und des zweiten Endgerätes umfasst.

4. Das Verfahren (10) gemäß einem der Ansprüche 1 bis 3, wobei die erste und die zweite Funkverbindung über ein Mobilfunknetz bereitgestellt werden.

5. Das Verfahren (10) gemäß einem der Ansprüche 1 bis 3, wobei die erste und die zweite Funkverbindung über Mobilfunknetze unterschiedlicher Mobilfunkbetreiber bereitgestellt werden.

6. Das Verfahren (10) gemäß einem der Ansprüche 1 bis 5, wobei die gemeinsame Anwendung Daten von dem ersten Endgerät und von dem zweiten Endgerät erfasst und diese synchronisiert darstellt.

7. Das Verfahren (10) gemäß einem der Ansprüche 1 bis 6, wobei das erste Endgerät und das zweite Endgerät der gemeinsamen Anwendung unterschiedliche Sensordaten liefern.

8. Das Verfahren (10) gemäß einem der Ansprüche 1 bis 7, ferner umfassend Übertragen von synchronisierten Daten von dem ersten Endgerät über die erste Funkverbindung und von dem zweiten Endgerät über die zweite Funkverbindung an die gemeinsame Anwendung und Darstellen der synchronisierten Daten durch die gemeinsame Anwendung.

9. Das Verfahren (10) gemäß einem der Ansprüche 1 bis 8, wobei das erste und/oder das zweite Endgerät Information über einen Stellgrad eines Aktors an die gemeinsame Anwendung übermittelt und wobei der Aktor ferngesteuert ist.

10. Das Verfahren (10) gemäß einem der Ansprüche 1 bis 9, wobei das Konfigurieren (14) der ersten und der zweiten Funkverbindung ein Konfigurieren einer direkten Funkverbindung zwischen dem ersten Endgerät und dem zweiten Endgerät umfasst und ferner ein Konfigurieren einer Funkverbindung zwischen der gemeinsamen Anwendung und dem ersten Endgerät und/oder dem zweiten Endgerät.

11. Das Verfahren (10) gemäß einem der Ansprüche 1 bis 10, ferner umfassend
Empfangen von ersten Daten von dem ersten Endgerät;
Empfangen von zweiten Daten von dem zweiten Endgerät; und
Darstellen von synchronisierten ersten und zweiten Daten auf einem dritten Endgerät durch die gemeinsame Anwendung.

12. Das Verfahren (10) gemäß Anspruch 9, wobei das erste Endgerät ein Aktivitätssensor zur Erfassung einer Muskelaktivität eines Patienten ist, wobei das zweite Endgerät ein Bewegungssensor zur Erfassung einer Bewegung eines Patienten ist und wobei das dritte Endgerät ein Videogerät zur Darstellung der Bewegung in einer virtuellen Umgebung ist.

13. Das Verfahren (10) gemäß Anspruch 10, wobei der Aktivitätssensor eine Muskelaktivität des Patienten misst und der Bewegungssensor eine Bewegung einer Hand des Patienten über ein Exoskelett mit Sensoren erfasst.

14. Ein Computerprogramm mit einem Programmcode zur Durchführung eines der Verfahren (10) gemäß einem der Ansprüche 1 bis 13, wenn der Programmcode auf einem Computer, einem Prozessor oder einer programmierbaren Hardwarekomponente ausgeführt wird.

15. Eine Vorrichtung (20) zur Konfiguration von Funkverbindungen für zwei oder mehr Endgeräte, die von einer gemeinsamen Anwendung benutzt werden, mit
ein oder mehreren Schnittstellen (22), die zur Kommunikation mit einem oder mehreren Kommunikationssystemen ausgebildet sind; und
ein oder mehreren Signalverarbeitungskomponenten (24), die ausgebildet sind, um eines der Verfahren gemäß einem der Ansprüche 1 bis 13 auszuführen.
